# EUROPEAN PATENT APPLICATION

(11) **EP 1 752 416 A2**
(43) Date of publication of application: **14.02.2007**
(21) Application number: 06015022.4
(22) Date of filing: 19.07.2006
(51) Int. Cl.: C01B 3/06

(54) **Method and apparatus for the generation of hydrogen**

(30) Priority: 25.07.2005 US 188539
(71) Applicant: Air Products and Chemicals, Inc., Allentown PA 18195-1510 (US)
(72) Inventor: Graham, David Ross, Harleysville, PA 19438 (US); Xu, Jianguo, Wrightstown, PA 18940 (US); Meski, George Amir, Allentown, PA 18103 (US)
(74) Representative: Schwabe - Sandmair - Marx

(57) **Abstract**

System for the generation of hydrogen comprising (a) a reactor vessel containing a hydrogen precursor material; (b) either (1) an inlet line adapted to introduce a reactive material and a treatment material into the reactor vessel, or (2) a first inlet line adapted to introduce a reactive material into the reactor vessel and a second inlet line adapted to introduce a treatment material into the reactor vessel; and (c) an outlet adapted to withdraw hydrogen from the reactor vessel.

## Description

### BACKGROUND OF THE INVENTION

Hydrogen is one of the most important industrial gases and is consumed in large volumes in the refining and chemical process industries. The hydrogen for these large volume applications typically is generated from natural gas by processes including steam-methane reforming and partial oxidation. Hydrogen also is used in many technically-advanced, smaller-volume applications such as fuel cells in which the hydrogen is provided by onsite storage systems that are periodically refilled with hydrogen generated at centralized sites and delivered by truck as liquid or compressed gas. Alternatively, hydrogen for smaller-volume applications may be generated for immediate consumption onsite by chemical generation methods such as, for example, the decomposition of chemical hydrides.

Methods for generating hydrogen from chemical hydrides are well known in the art. For example, U.S. Pat. No. 3,174,833 (Blackmer) discloses a device for the generation of hydrogen gas for supplying hydrogen to a fuel cell. The device comprises two compartments, an upper compartment containing a chemical hydride and a lower compartment containing an aqueous solution. By applying pressure, the aqueous solution flows into the upper compartment, reacts with the chemical hydride and generates hydrogen gas. The flow rate of the aqueous solution is controlled by a valve located between the two compartments. The valve, in turn, is controlled by hydrogen gas pressure, thus providing a constant pressure flow. In addition, U.S. Pat. Application No. 2003/0037487 discloses a hydrogen generator system wherein a chemical hydride solution contacts a catalyst resulting in the generation of hydrogen gas. A pump is used to drive the chemical hydride solution from its container to the catalyst system. The pump can be activated or deactivated to control the pressure of the system.

As disclosed in U.S. Pat. No. 6,645,651 (Hockaday et al.), chemical hydrides release hydrogen when combined with water. Examples of such chemical hydrides include LiH, LiAlH₄, LiBH₄, NaH, NaAlH₄, NaBH₄, MgH₂, Mg(BH₄)₂, KH, KBH₄, CaH₂, and Ca(BH₄)₂. It is well known that most chemical hydrides react violently with water with the evolution of hydrogen, which can form an explosive mixture with air. Some chemical hydrides, such as LiAlH₄, NaH and KH, are pyrophoric. Most chemical hydrides can be decomposed by the gradual addition of (in order of decreasing reactivity) methyl alcohol, ethyl alcohol, *n*-butyl alcohol, or *t*-butyl alcohol to a stirred, ice-cooled solution or suspension of the hydride in an inert liquid, such as diethyl ether, tetrahydrofuran, or toluene, under nitrogen in a three-necked flask. Although these procedures reduce the hazard, and should be a part of any experimental procedure that uses reactive metal hydrides, the products from such deactivation may be hazardous waste that must be treated as such on disposal.

Chemical hydrides have been commonly used in laboratories. Prudent Practices in the Laboratory: Handling and Disposal of Chemicals, National Academy Press (1995) discloses methods for the disposal of chemical hydrides and explains that the reactivity of metal hydrides varies considerably. Most hydrides can be decomposed safely by one of the following four methods, but the properties of a given hydride must be well understood in order to select the most appropriate method. Also, caution must be exercised since the methods described below produce hydrogen gas, which can present an explosion hazard.

### Decomposition of lithium aluminum hydride:

Lithium aluminum hydride (LiAlH₄) can be purchased as a solid or as a solution in toluene, diethyl ether, tetrahydrofuran, or other ethers. Although drop-wise addition of water to the hydride solution under nitrogen in a three-necked flask has frequently been used to decompose the hydride, vigorous frothing often occurs. An alternative is to use 95% ethanol, which reacts less vigorously than water. As shown by the reaction equation below, a safer procedure is to decompose the hydride with ethyl acetate since no hydrogen is formed during the reaction.

2CH₃CO₂C₂H₅ + LiAlH₄ → LiOC₂H₅ + Al(OC₂H₅)₃

Ethyl acetate is slowly added to the hydride solution in a flask equipped with a stirrer. The mixture sometimes becomes very viscous after the addition such that stirring is difficult. Therefore, additional solvent may be required. When the reaction with ethyl acetate has ceased, a saturated aqueous solution of ammonium chloride is added and the mixture is stirred. The mixture separates into an organic layer and an aqueous layer containing inert inorganic solids. The upper, organic layer should be separated and disposed of as a flammable liquid. The lower, aqueous layer can often be disposed of in the sanitary sewer.

### Decomposition of potassium or sodium hydride:

Potassium hydride and sodium hydride (KH, NaH) are pyrophoric in the dry state, but can be purchased as a relatively safe dispersion in mineral oil. Either form can be decomposed by adding enough dry hydrocarbon solvent (e.g., heptane) to reduce the hydride concentration below 5% and then adding excess t-butyl alcohol drop wise under nitrogen with stirring. Cold water is then added dropwise, and the resulting two layers are separated. The organic layer can be disposed of as a flammable liquid. The aqueous layer can often be neutralized and disposed of in the sanitary sewer.

### Decomposition of sodium borohydride:

Sodium borohydride (NaBH₄) is stable in water such that a 12% aqueous solution stabilized with sodium hydroxide is sold commercially. In order to cause decomposition of NaBH₄, the solid or aqueous solution is added to enough water to make the borohydride concentration less than 3%, and then excess equivalents of dilute aqueous acetic acid are added drop wise while stirring under nitrogen.

### Decomposition of calcium hydride:

Calcium hydride (CaH₂), the least reactive of the materials discussed here, is purchased as a powder. It is decomposed by adding 25 milliliters of methyl alcohol per gram of hydride under a nitrogen purge while stirring the mixture. When the reaction is complete, an equal volume of water is gradually added to the stirred slurry of calcium methoxide. The mixture is then neutralized with acid and disposed of in a sanitary sewer.

Laboratory methods for chemical hydride disposal, such as those described above, typically use a nitrogen gas purge to remove flammable gases from a vessel used for the disposal of chemical hydride. As a result, a high purity hydrogen product cannot be produced. Also, such laboratory methods are inefficient since they usually involve the addition of several reactants in a specified order (e.g., addition of alcohol, followed by addition of water). Further, several laboratory processes for disposing of chemical hydride focus only on the disposal of the chemical hydride itself and not other components of the reaction mixture, including hydrolysis products and hydrogen gas, which may remain in the vessel.

There are several differences between laboratory methods for disposing of chemical hydrides and those associated with the larger scale, industrial or commercial production of hydrogen. U.S. Pat. Appl. No. 2004/0009379 (Amendola et al.) discloses a method for treating a discharged fuel solution, including chemical hydride, remaining after the generation of hydrogen gas by reducing the water content of the reaction components. The processing of the discharged fuel utilizes an atomizer or sprayer which receives the discharged fuel and produces a fine mist so that the water quickly evaporates. This reduction in water content decreases the volume and weight of material that must be shipped back to a receiving/recycling facility, thereby reducing the cost of the transportation. However, a reduction in water content does not eliminate hazards associated with the reaction products. In particular, it does not eliminate unreacted chemical hydride and does not mitigate hazards associated with the hydrolysis products that may comprise the reaction products.

U.S. Pat. No. 6,645,651 cited above discloses a fuel generator with two diffusion ampoules for use with fuel cells. One ampoule contains a chemical hydride while the other contains a substance such as water, alcohol or acid. The two ampoules are separated by a permeable membrane such that the chemical hydride can be combined with the substance causing a reaction which produces hydrogen gas. A method to neutralize the hydrolysis products of the reaction by a reaction with carbon dioxide (CO₂) also is disclosed. A specific example is given in which a reaction of CO₂ with LiOH produces Li₂CO₃ and water. The water can react with unreacted LiH. By treating the reaction products with CO₂, the hydrolysis products are neutralized and the amount of water available to react with fresh chemical hydride is increased. Further, the reaction with CO₂ is described as being carried out concurrently with the hydrogen generation reaction. However, the simultaneous addition of CO₂ during the production of hydrogen gas does not ensure that the reaction vessel will be free of hydrogen gas after the reaction is complete. The simultaneous addition of CO₂ can also reduce the purity of the hydrogen produced.

Based on the art reviewed above, it is seen that the generation of hydrogen by the reaction of chemical hydrides with liquids such as water can produce hazardous residual materials that remain in the generation system. Hazardous residual materials also may be present after hydrogen production using other chemical generation systems. After the requirement for the generated hydrogen is complete, it may be necessary to treat these hazardous residual materials in a manner that yields less hazardous and preferably non-hazardous residual materials. There is a need for operational methods that combine the generation of hydrogen for consumption with the treatment of residual hazardous materials after the requirement for the generated hydrogen is complete. This need is addressed by the embodiments of the present invention disclosed below and defined by the claims that follow.

### BRIEF SUMMARY OF THE INVENTION

An embodiment of the invention relates to a system for the generation of hydrogen comprising (a) a reactor vessel containing a hydrogen precursor material; (b) either (1) an inlet line adapted to introduce a reactive material and a treatment material into the reactor vessel, or (2) a first inlet line adapted to introduce a reactive material into the reactor vessel and a second inlet line adapted to introduce a treatment material into the reactor vessel; and (c) an outlet adapted to withdraw hydrogen from the reactor vessel.

In a particular version of this embodiment, the system has a first inlet line adapted to introduce a reactive material into the reactor vessel and a second inlet line adapted to introduce a treatment material into the reactor vessel. The first inlet line may include a flow control device to control the flow of the reactive material. The second inlet line may include a flow control device to control the flow of the treatment material.

The hydrogen precursor material may be selected from the group consisting of LiH, LiAlH₄, LiBH₄, NaH, NaAlH₄, NaBH₄, MgH₂, Mg(BH₄)₂, KH, KBH₄, CaH₂, Ca(BH₄)₂, NH₃BH₃, aluminum, magnesium, magnesium-iron alloys, and combinations thereof. The reactive material may be selected from the group consisting of liquid water, water vapor, aqueous solutions, liquid ammonia, gaseous ammonia, liquid alcohols, gaseous alcohols, acidic solutions, basic solutions, and combinations thereof.

The treatment material may be selected from the group consisting of liquid water, water vapor, aqueous solutions, liquid ammonia, gaseous ammonia, liquid alcohols, gaseous alcohols, acidic solutions, basic solutions, carbon dioxide, and combinations thereof.

The system may further comprise a heater adapted to heat the contents of the reactor vessel. Alternatively or additionally, the system may further comprise a mixer adapted to mix the contents of the reactor vessel.

The system may further comprise a first storage vessel adapted to store the reactive material and having an outlet connected to the first inlet line. In addition, the system may further comprise a second storage vessel adapted to store the treatment material and having an outlet connected to the second inlet line. The first and second storage vessels may be joined to the reactor vessel to form an integrated system. Alternatively, the system may further comprise a storage vessel adapted to store the treatment material and having an outlet connected to the second inlet line.

Another embodiment of the invention relates to a method for the generation of hydrogen comprising
(a) providing a reactor vessel having an inlet and an outlet;
(b) effecting a hydrogen generation step comprising
   (b1) introducing a hydrogen precursor material into the reactor vessel;
   (b2) introducing a reactive material into the reactor vessel and reacting at least a portion of the reactive material with at least a portion of the hydrogen precursor material to generate reaction products including any of hydrogen, byproduct material, unreacted reactive material, and unreacted hydrogen precursor material; and
   (b3) withdrawing hydrogen from the outlet of the reactor vessel; and
(c) completing the hydrogen generation step and effecting a treatment step comprising introducing a treatment material into the reactor vessel and either or both of
   (c1) reacting the treatment material with any of (i) the byproduct material, (ii) the unreacted reactive material, and (iii) the unreacted hydrogen precursor material; and
   (c2) displacing from the reactor vessel any of (i) the byproduct material, (ii) the unreacted reactive material, (iii) the unreacted hydrogen precursor material, and (iv) hydrogen.

In this embodiment, the hydrogen precursor material may be selected from the group consisting of LiH, LiAlH₄, LiBH₄, NaH, NaAlH₄, NaBH₄, MgH₂, Mg(BH₄)₂, KH, KBH₄, CaH₂, Ca(BH₄)₂, NH₃BH₃, aluminum, magnesium, magnesium-iron alloys, and combinations thereof. The reactive material may be selected from the group consisting of liquid water, water vapor, aqueous solutions, liquid ammonia, gaseous ammonia, liquid alcohols, gaseous alcohols, acidic solutions, basic solutions, and combinations thereof. The treatment material may be selected from the group consisting of liquid water, water vapor, aqueous solutions, liquid ammonia, gaseous ammonia, liquid alcohols, gaseous alcohols, acidic solutions, basic solutions, carbon dioxide, and combinations thereof.

The method may further comprise heating the contents of the reactor vessel. The method may further comprise mixing the contents of the reactor vessel.

### BRIEF DESCRIPTION OF SEVERAL VIEWS OF THE DRAWINGS

Figure 1 is a schematic diagram of one embodiment of the present invention.

Figure 2 is schematic diagram of a second embodiment of the present invention.

### DETAILED DESCRIPTION OF THE INVENTION

Embodiments of the present invention address the transportation and disposal of the reaction products of hydrogen generators using chemical hydride-based reactions or other reactions known in the art. In these reactions, a hydrogen precursor material is reacted with a reactive material to generate hydrogen and other reaction products. As known in the art, catalysts are sometimes used to increase the rate of the reaction. The hydrogen precursor material and the reactive material are defined as materials which are stored separately and subsequently mixed and reacted to produce hydrogen and other reaction products. The reaction products, some or all of which may be hazardous, are subsequently contacted with a treatment material to reduce or eliminate the hazardous reaction products.

The term "reaction product" is defined as any solid, liquid, or gaseous material present following the reaction of the hydrogen precursor material and the reactive material to produce hydrogen. Reaction products therefore include any of the following: hydrogen, byproducts produced in the hydrogen generation reactions, unreacted hydrogen precursor material, and unreacted reactant material. In the generation of hydrogen in a hydride-based system, for example, the reaction products may include the hydrolysis products of the hydrogen generation reactions, unreacted chemical hydride material, unreacted reactive material, and residual hydrogen gas present in the reaction vessel. When the hydrogen generation process is complete, the generator is defined as "spent", wherein the generator contains reaction products and is not used for further hydrogen generation. The hydrogen generation process is defined as complete when (a) the hydrogen generation rate of the system falls below a predetermined required delivery rate or (b) the need for the hydrogen product gas is complete. The hydrogen generator may be, for example, a modular, integrated, single-use system which is disconnected from the hydrogen consuming device when the hydrogen generation process is complete. The spent hydrogen generator should be sufficiently non-hazardous so that it can be disposed of, temporarily stored, or transported to a central location for recharging and reuse.

The term "treatment material" is defined as any material which (1) reacts with any of (i) the byproduct material, (ii) the unreacted reactive material, and (iii) the unreacted hydrogen precursor material and (2) displaces from the reactor vessel any of (i) the byproduct material, (ii) the unreacted reactive material, (iii) the unreacted hydrogen precursor material, and (iv) hydrogen. This treatment reduces or eliminates hazards associated with the reaction products of a hydrogen generation process.

Exemplary hydrogen precursor materials may be selected from the group consisting of LiH, LiAlH₄, LiBH₄, NaH, NaAlH₄, NaBH₄, MgH₂, Mg(BH₄)₂, KH, KBH₄, CaH₂, Ca(BH₄)₂, NH₃BH₃, aluminum, magnesium, magnesium-iron alloys, and combinations thereof. Reactant materials may include one or more of the group consisting of liquid water, water vapor, aqueous solutions, liquid ammonia, gaseous ammonia, liquid alcohols, gaseous alcohols, acidic solutions, and basic solutions. Treatment materials may include one or more of the group consisting of liquid water, water vapor, aqueous solutions, liquid ammonia, gaseous ammonia, liquid alcohols, gaseous alcohols, acidic solutions, basic solutions, and carbon dioxide.

Any of the reaction products described above can be hazardous. In the operation of hydride-based generators, for example, the hydrolysis products are formed in varying degrees of hydration, and the hazards associated with the hydrolysis products depend on the degree of hydration. In general, hydrolysis products with higher degrees of hydration are less hazardous than those with lower degrees of hydration. Both hydrogen gas and unreacted chemical hydride generally are even more hazardous than the hydrolysis products. The presence of these hazardous materials in the reaction products in a spent hydride-based generator increases the difficulty, cost, and regulatory problems associated with shipment and disposal of the spent generator.

In the embodiments of the present invention, an extra step is added to minimize or eliminate the amount of hazardous materials present after the hydrogen generation step is completed. In particular, the extra step comprises introducing a treatment material into the reactor vessel and either or both of the following: (1) reacting the treatment material with any of (i) the byproduct material, (ii) the unreacted reactive material, and (iii) the unreacted hydrogen precursor material; and (2) displacing from the reactor vessel any of (i) the byproduct material, (ii) the unreacted reactive material, (iii) the unreacted hydrogen precursor material, and (iv) hydrogen. In hydrogen generation processes using chemical hydrides as the hydrogen precursor material, the reaction vessel may contain, for example, unreacted chemical hydride, hydrogen gas, and the hydrolysis products of the reaction. The presence of flammable materials cause complications associated with disposal and/or shipping of the reaction products from the hydrogen generation process.

An embodiment of the invention includes a process for hydrogen generation in which (1) a chemical hydride or other hydrogen precursor material is used to generate hydrogen by contact with a reactive material and (2) the reaction products are further processed to reduce hazardous properties of the reaction products by the addition of one or more treatment materials. If required, the hazardous properties of the reaction products may be completely eliminated. Step (2), the treatment step, is effected at any time after step (1) is complete. The hydrogen generation process, i.e., step (1), is defined as complete when (a) the hydrogen generation rate of the system falls below a predetermined required delivery rate or (b) the need for the hydrogen product gas is complete. Advantageously, steps (1) and (2) may be carried out in the same reactor vessel, and step (2) may follow immediately after step (1).

After steps (1) and (2) are completed, both the generation system and the residual reaction product materials contained in the system should be less hazardous and may be non-hazardous. In step (2), one or more treatment materials may be used to mitigate hazards associated with the reaction products by (a) reacting with the hazardous reaction products and/or unreacted reactive material to form less hazardous (and possibly non-hazardous) materials, (b) displacing the hazardous reaction products from the generation system, or (c) a combination of (a) and (b). The one or more treatment materials may be stored for use in step (2) in part of the generation system or may be stored separately from the generation system.

The term "non-hazardous" as applied herein to residual reaction product materials in the generation system means that these materials are classified as non-hazardous according to United States Department of Transportation regulations.

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity.

Exemplary methods to mitigate hazards associated with the reaction products in a spent hydride-based hydrogen generation system may include a treatment step such as
- Adding a large amount of water as the treatment material to the generator reaction vessel. The water will both displace the hydrogen and react with any remaining hydride.
- Adding an acid solution to the reaction vessel as the treatment material.
- When hydrogen is produced from Al powder, adding a base as a treatment material to ensure that the reaction is complete. For example, an aqueous solution of sodium hydroxide can be used.
- Adding an acidic gas as the treatment material to the reaction products. For example, the addition of CO₂ can displace any remaining hydrogen gas and also may promote the reaction of unreacted chemical hydride. In one embodiment, the CO₂ gas can be generated onsite. This can be accomplished by using solid and/or liquid materials that generate CO₂ under suitable conditions. In one example, acid may be added to carbonate or bicarbonate salts, such as sodium bicarbonate or calcium carbonate, to generate CO₂. Alternatively, solid CO₂ (dry ice) or liquid CO₂ may be added to the reactor containing of reaction products.

In one embodiment, the reaction products are treated by the addition of a treatment material which is a solid, a liquid solution, a gas, or a combination thereof. The liquid solution may be an acidic solution or a basic solution. The gas may be generated from the solid material, the liquid solution or a combination of both. Also, the gas may be acidic and may be substantially CO₂. In another variation, the hydrogen gas remaining in the reactor vessel is displaced from the vessel after the reaction is complete. In yet another variation, heat is added to the reaction products during step (2). In yet another variation of the method, the treated reaction products are removed from the vessel so that they can be disposed of separately.

The apparatus for generating a hydrogen product includes several components as described below. The first component is a reactor vessel for containing a chemical hydride or other hydrogen precursor material and the second component includes means for controllably reacting the chemical hydride or other hydrogen precursor material and an aqueous solution or other reactant material in the reactor vessel to form reaction products including hydrogen gas. The third component includes means for treating the reaction products with a treatment material, thereby minimizing an amount of hazardous material in the reaction products; the fourth component is an outlet for removing at least a portion of the generated hydrogen gas from the vessel. In one variation of the apparatus, the hydrogen generation and the treatment of the reaction products are effected in the same reactor vessel.

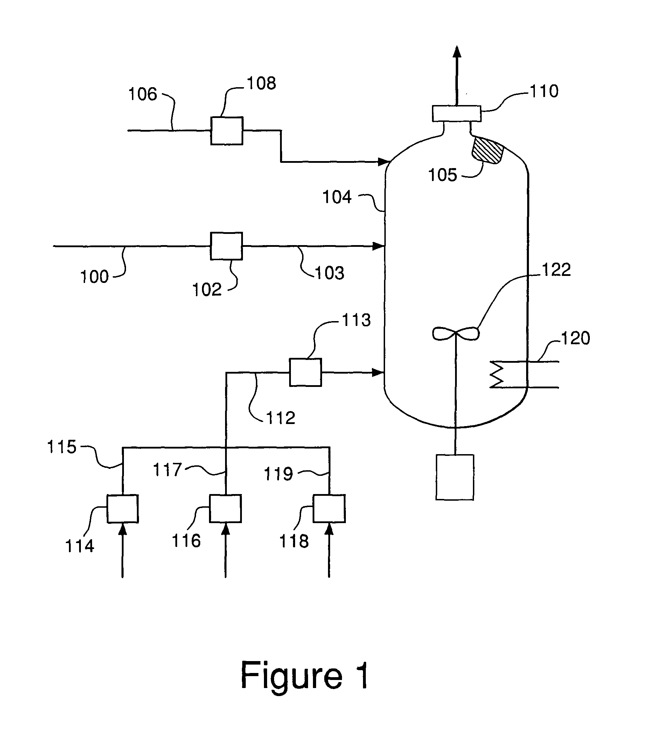

Figure 1 illustrates an exemplary embodiment of the invention for the generation of hydrogen utilizing a chemical hydride generation process in which the hydrogen precursor is a chemical hydride. A chemical hydride inlet stream is fed via line 100 to a first control device 102 which controls flow of the chemical hydride in line 103 to reaction vessel 104. Optional reaction vessel port 105 may be used to fill, empty, inspect, or clean the reaction vessel. An aqueous solution stream is fed via line 106 to a second control device 108 which controls flow of the aqueous solution to reaction vessel 104. The first control device 102 and the second control device 108 are optional, but there must be a means of controllably reacting the chemical hydride with the aqueous solution. This is a useful feature of the invention since prior art devices for disposing of chemical hydride are typically uncontrollable. By controlling the reaction, the hydrogen product can be supplied at a desired flow rate as low as 1 sccm.

Thus either the first flow control device 102 or the second flow control device 108 controls the reaction by controlling the flow of chemical hydride or aqueous solution, respectively, to the reaction vessel 104. Typically, the first flow control device 102 and the second flow control device 108 are valves which control the reaction by controlling the flow of the chemical hydride inlet steam in line 100 and the aqueous solution stream in line 106, respectively, to reaction vessel 104. Alternatively, either or both of the first flow control device 102 and the second flow control device 108 may be a restrictive orifice, a membrane, a nozzle, or a diffusion wicking device. Alternatively, the reaction may be controlled by controlling the pressure of the chemical hydride inlet stream in line 100, the aqueous solution stream in line 106, or both the hydride inlet stream in line 100 and the aqueous solution stream in line 106. Similarly, the reaction may be controlled by controlling the differential pressure between reaction vessel 104 and chemical hydride inlet stream in line 100, the aqueous solution stream in line 106, or both the hydride inlet stream in line 100 and the aqueous solution stream in line 106. Outlet 110 is connected to reaction vessel 104 for the withdrawal of at least the reaction products, including hydrogen gas, from the reaction vessel 104. Additional outlets (not shown) may be utilized, for example, to remove hydrogen gas and the other reaction products.

The chemical hydride inlet stream in line 100 and the aqueous solution stream in line 106 are fed to the reaction vessel 104 causing a chemical reaction therein and the generation of reaction products including hydrogen gas. The reaction products in this illustration include, but are not necessarily limited to, the hydrolysis products of the reaction used to generate hydrogen, unreacted chemical hydride, and hydrogen gas present in the reaction vessel 104 after the hydrogen generation process is complete. The hydrogen generation process is continued until the hydrogen generation process is complete, and the generator is defined as "spent" when the generator contains reaction products and is not used for further hydrogen generation. The hydrogen generation process (i.e., step (1) described above) is defined as complete when (a) the hydrogen generation rate of the system falls below a predetermined required delivery rate or (b) the need for the hydrogen product gas is complete.

After the hydrogen generation process is complete, one or more treatment materials comprising a solid material, liquid solution, gas, or any combination thereof is added to the reaction vessel 104 to mitigate hazards associated with the reaction products by reacting at least one hazardous material in the reaction products, by displacing at least one hazardous material from the reaction vessel 104, or both. The solid material, liquid solution, gas, or any combination thereof is added to the reaction vessel 104 via the chemical hydride inlet line 100, the aqueous solution inlet line 106, or both the hydride inlet line 100 and the aqueous solution inlet line 106.

A stream of treatment material comprising the solid material, liquid solution, gas, or any combination thereof is added to the reaction vessel 104 via line 112 and optional treatment stream control device 113. At least one of solid material inlet control device 114, liquid solution inlet control device 116, and gas inlet control device 118 may be provided and utilized, and at least one of solid material inlet line 115, liquid solution inlet line 117, and gas inlet stream 119 may be provided and utilized. The solid material, liquid solution, gas, or any combination thereof may be added to the reaction vessel 104 by many different means. For example, the solid material, liquid solution, gas, or any combination thereof may be added directly to reaction vessel 104 via the solid material inlet line 115, liquid solution inlet line 117, or gas inlet line 119, respectively, thereby eliminating the need for the treatment line 112 and the treatment stream control device 113.

In an alternative embodiment, reaction vessel 104 may have a single inlet for introducing the chemical hydride or other hydrogen precursor material, the reactive material, and the treatment material. For example, the lines from flow control devices 102, 108, and optionally 113 may be connected via piping (and valves as required) to the single inlet (not shown).

The reaction products can include a mixture of unreacted chemical hydride, hydrolysis products, and hydrogen gas. These reaction products typically are hazardous due to flammability, corrosivity, and/or reactivity. In particular, hydrogen gas is flammable, unreacted chemical hydrides may react violently with water to generate hydrogen gas, and the hydrolysis products may not be fully hydrated. Hydrolysis products that are not fully hydrated can be more difficult to handle than their hydrated forms. For example, calcium oxide is regulated as a hazardous material by the United States Department of Transportation, but its hydrated form, Ca(OH)₂, is not regulated. Also, the hydrolysis products may present corrosivity hazards to due their high pH.

Thus the embodiments of the invention for reducing the hazardous reaction material in a hydride-based hydrogen generation process involve controllably reacting a chemical hydride with an aqueous solution to form the plurality of reaction products, including a hydrogen product, and treating at least one of the plurality of reaction products, thereby minimizing at least a portion of the hazardous material in the plurality of reaction products. As a result, the embodiments provide methods for treating any unreacted chemical hydride which remains in the reaction vessel 104 after the chemical reaction is complete.

The treating step typically begins essentially when the hydrogen generation or reaction step ends. The term "essentially when the hydrogen generation or reaction step ends" is defined such that the amount of time between completion of the reaction step and initiation of the treatment of the reaction products is about less than or equal to the duration of the reaction step. For example, if the reaction between the chemical hydride and the aqueous solution to form the plurality of reaction products takes 24 hours, the treatment of the reaction products would begin about less than or equal to 24 hours after the reaction is about complete. Advantageously, the treating step occurs immediately after the reaction step is complete.

It also is advantageous for the reaction step and the treatment step to occur in the same vessel. This is a useful feature of the present embodiments, as many existing processes for treating reaction products of hydrogen generation processes treat the reaction products at a remote location. Thus the embodiments of the present invention allow the hydrogen reaction step and the reaction product treatment step to be performed sequentially at the same location. As described above, the treatment material added to the plurality of reaction products may be a solid material, a liquid solution, and/or a gas. Advantageously, the liquid solution is an aqueous solution or water.

The liquid solution used for the treatment material can be either an acidic solution or a basic solution. The treatment material added to the reaction products may be an aqueous solution of sodium hydroxide (NaOH) when an aqueous, basic solution is used in the treating step. The concentration of the sodium hydroxide solution may be between about 1 weight percent and about 20 weight percent. The gas may be generated from the solid material, the liquid solution, or both the solid material and the liquid solution as described above. When an acidic gas is the reactive material added to the reaction products, the gas typically comprises CO₂. Carbon dioxide gas can be obtained from any source or it can be generated onsite such by using solid materials, liquid solutions, or both. Examples of methods for generating CO₂ include, but are not limited to, the addition of acid to carbonate or bicarbonate salts, such as sodium bicarbonates or calcium carbonate, the sublimation of dry ice, and the addition of liquid CO₂ to the reaction products.

The treating step also may include displacing one or more of the reaction products, including hydrogen gas, from reaction vessel 104 after the reacting step is complete. Further, the treating step can include heating the plurality of reaction products in the reaction vessel 104 in order to more efficiently eliminate unreacted chemical hydride, displace flammable gases, mitigate hazards associated with any hydrolysis products, or any combination thereof. This may be accomplished, for example, by optionally installing heater assembly 120 in reaction vessel 104. Agitator 122 optionally may be installed in reaction vessel 104 for mixing the chemical hydride, the aqueous solution, and the reaction products.

Exemplary methods to mitigate the hazards associated with the reaction products include, but are not limited to, adding water, an acid solution, or a basic solution to reaction vessel 104 via the treatment line 112 such that the water or solution displace at least the hydrogen gas and react with any remaining hydride. Thus a basic solution of NaOH can be used to ensure that the reaction has gone to completion. Alternatively, an acidic gas, such as CO₂, can be added to the reaction products to displace any remaining hydrogen gas in reaction vessel 104 and may also promote the reaction of unreacted chemical hydride.

Referring again to Figure 1, an embodiment of the invention includes simultaneously adding a chemical hydride and water into reaction vessel 104 via the chemical hydride inlet line 100 and the aqueous solution inlet line 106, respectively. Alternatively, the chemical hydride may be added to the reaction vessel and stored therein for any length of time before water is added. After water is added to reaction vessel 104, the contents of the reaction vessel 104 can be agitated by operating agitator 122 to promote the reaction of the chemical hydride with the water. Additional water may be added to reaction vessel 104 via aqueous solution inlet line 106, treatment material inlet line 112, or both aqueous solution inlet line 106 and treatment material inlet line 112 after the reaction is complete. This added material will react with any unreacted chemical hydride, dissolve any hydrolysis products, and displace the reaction products, including hydrogen gas. The amount of additional water added may be sufficient to fill at least 50% of the void volume of reaction vessel 104 and possibly at least 90% of the reaction vessel 104.

As stated above, an acidic or basic solution alternatively may be added as the treatment material to reaction vessel 104 after the reaction is complete. Acidic solutions include both strong acids, such as sulfuric acid and hydrochloric acid, and weak acids, such as acetic acid and carbonic acid, which promote the same or similar reactions as the reaction associated with adding water to the reaction vessel 104. An acidic solution may be generated within the reaction vessel by first adding water and then adding an acidic salt such as sodium bisulfate. A basic solution is preferable when aluminum powder is used as a reactant. In this case, the basic solution will displace hydrogen gas, solubilize the hydrolysis products of aluminum powder, and promote further reaction of any unreacted aluminum powder.

As mentioned, another alternative to treating the reaction products after the reaction is complete is to introduce CO₂ to the reaction vessel via line 112 in order to eliminate any hydrogen gas remaining in reaction vessel 104. CO₂ may be generated from solid or liquid materials that are added to reaction vessel 104. Examples of solid or liquid materials that can generate CO₂ include dry ice, liquid CO₂, or a mixture of acid with carbonate or bicarbonate salts. Examples of carbonate or bicarbonate salt include calcium carbonate and sodium bicarbonate. The use of solid or liquid materials to generate CO₂ is advantageous when the hydrogen generator is located in a remote area, since the materials can be easily introduced into reaction vessel 104 and the CO₂ can be generated onsite. In addition to displacing the hydrogen gas, CO₂ can also neutralize some of the hydrolysis products and may liberate water that reacts with any unreacted chemical hydride.

Heat may be introduced into reaction vessel 104 by activating heater assembly 120 after the hydrogen generation reaction is complete and after water is introduced into reaction vessel 104 to react with remaining unreacted chemical hydride and dissolve the hydrolysis products. The heater can vaporize the water and the formed vapor can displace some or all of the remaining reaction products, including hydrogen gas, remaining within reaction vessel 104. By vaporizing the water, the total weight of the contents of the reaction vessel 104 is reduced which may reduce the cost associated with transporting the reaction products from reaction vessel 104. The water vapor and reaction products also may be removed from reaction vessel 104 by drawing a vacuum on the vessel. Additionally, reaction vessel 104 may be heated and placed under a vacuum in order to increase the reaction rate and the removal of reaction products from reaction vessel 104.

The embodiments described above for a chemical hydride-based hydrogen generation system can be used for systems that use any other hydrogen precursor materials such as, for example, aluminum, magnesium, magnesium-iron alloys, and combinations thereof that can react with a reactive material such as liquid water, water vapor, aqueous solutions, liquid ammonia, gaseous ammonia, liquid alcohols, gaseous alcohols, acidic solutions, basic solutions, and combinations thereof.

Embodiments of the present invention also may include transporting the reaction products, including the hydrogen gas, after the treating step. The presence of hazardous materials in the reaction product mixture increases the difficulty, cost, and regulatory problems associated with the transportation and disposal of the reaction products, including hydrogen gas. As a result, the embodiments of the present invention, by reducing or eliminating some or all of the hazardous materials in the reaction products, provide an efficient and cost-effective method that also may reduce the regulatory hurdles associated with transporting and disposing of the reaction products.

Accordingly, an embodiment of the present invention can reduce an amount of at least one hazardous material in a plurality of reaction products of a hydrogen generation process by controllably reacting a chemical hydride with an aqueous solution to form the plurality of reaction products including hydrogen gas; treating at least one of the plurality of reaction products, thereby minimizing the amount of the at least one hazardous material in the plurality of reaction products; and transporting the at least one of the plurality of reaction products, wherein an end of the reacting step and a beginning of the treating step occur at essentially the same time, and wherein the transporting step occurs after the treating step.

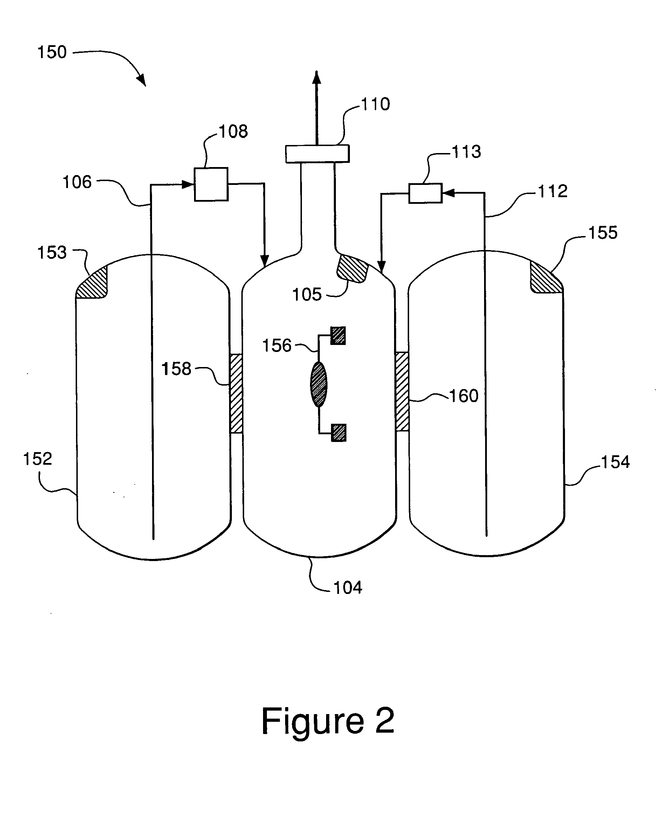

Figure 2 illustrates a second embodiment of the invention. For simplicity, the common components in Figure 1 have been retained in Figure 2. Apparatus 150 for generating a hydrogen product comprises reaction vessel 104, which initially contains a chemical hydride or other hydrogen precursor, first vessel 152, which initially contains an aqueous solution, and second vessel 154 which initially contains the treatment material. Reaction vessel 104, first vessel 152, and second vessel 154 optionally include reaction vessel port 105, first vessel port 153, and second vessel port 155. As is the case with reaction vessel port 105 of Figure 1, first vessel port 153 and second vessel port 155 may be used to fill, empty, inspect, or clean first vessel 152 and second vessel 154, respectively.

The treatment material charged to apparatus 150 may be a solid material, an aqueous solution, or a gas. A reaction occurs when the aqueous solution is controllably introduced from first vessel 152 into reaction vessel 104 and reacts with the chemical hydride, which generates reaction products including hydrogen gas. Reaction vessel 104 has outlet 110 for removing at least the hydrogen gas, and possibly other reaction products, from reaction vessel 104 during the reaction and after the reaction is complete.

The aqueous solution stream flows via line 106 from first vessel 152 to reaction vessel 104, optionally via second control device. As with the first embodiment, there should be a means of controllably reacting the chemical hydride with the aqueous solution. Preferably, second control device 108 is used to regulate the flow rate of reactant from first vessel 152 and thereby control the reaction of the chemical hydride with the aqueous solution. Typically, second control device 108 is a valve used to control the amount of aqueous solution introduced into the reaction vessel 104. Alternatively, control device 108 may be a restrictive orifice, a membrane, a nozzle, or a diffusion wicking device. Alternatively, the reaction may be controlled by controlling the differential pressure between reaction vessel 104 and aqueous solution vessel 152.

Line 112 and optional treatment stream control device 113 are used to transfer the stream of treatment material from the second vessel 154 to the reaction vessel 104 in order to treat the reaction products and thereby minimize at least one hazardous material present in the reaction products. Typically, treatment stream control device 113 is a valve which controls the amount of reactive material which is introduced into the reaction vessel 104, thereby controlling the rate at which the reaction products are treated in reaction vessel 104. Alternatively, control device control device 113 may be a restrictive orifice, a membrane, a nozzle, or a diffusion wicking device. Alternatively, the rate at which the reaction products are treated may be controlled by controlling the differential pressure between reaction vessel 104 and second vessel 154.

The second embodiment of the invention provides a compact, safe, and efficient apparatus for storing and generating hydrogen gas. Apparatus 150 typically is portable and may be both portable and disposable. Alternatively or additionally, apparatus 150 may be designed to be reusable. For example, one or more of reaction vessel 104, first vessel 152, and second vessel 154 can be reused by refilling them with a chemical hydride, an aqueous solution, and a reactive material, respectively. Reaction vessel 104, first vessel 152, and second vessel 154 may be refilled via reaction vessel port 105, first vessel port 153, and second vessel port 155, respectively.

Referring again to Figure 2, apparatus 150 may be transported using handle 156. Advantageously, reaction vessel 104, first vessel 152, and second vessel 154 may be three different vessels to ensure that the chemical hydride, the aqueous solution, and the reactive material remain separated until the reaction is started. First vessel 152 optionally is joined to reaction vessel 104 by first connection joint 158 and second vessel 154 optionally is connected to reaction vessel 104 by second connection joint 160 to form an integrated system as shown in Figure 2. The vessels may be joined in any desired fashion to form an integrated system.

Other means may be used for separating and controllably reacting the chemical hydride and the aqueous solution. For example, apparatus 150 may consist of a single vessel with separate compartments for the chemical hydride, the aqueous solution, and the treatment material wherein the compartments are separated by permeable membranes designed to allow a chemical hydride to diffuse through the membrane and react with a second reactant.

Outlet 110 for removing at least the hydrogen product from the reaction vessel also may be connected, either directly or indirectly, to a device that consumes the hydrogen product such as, for example, a fuel cell assembly.

In all embodiments of the invention described above, the hydrogen precursor material may be introduced into the reactor vessel before the reactive material is introduced. In one embodiment, the hydrogen precursor material is stored for extended periods in the vessel. In another embodiment, the precursor material is introduced into the reactor vessel immediately before the introduction of the reactive material. In yet another embodiment, the hydrogen precursor material and the reactive material are introduced into the reactor vessel simultaneously. In any of these embodiments, the reactor vessel will contain hydrogen precursor material for at least a portion of the time during which the reactor is utilized for hydrogen generation and may contain hydrogen precursor material for at least a portion of the time during which the reactor is utilized for treatment of the reaction products.

The following Examples illustrate embodiments of the present invention but do not limit the invention to any of the specific details described therein.

### EXAMPLE 1

In this example, a treatment material consisting of water is introduced into a vessel containing reaction products from a hydrogen generation process after controllably reacting a chemical hydride with an aqueous solution to form the reaction products including a hydrogen product. After the water is added, the contents of the vessel are agitated to facilitate reaction of the chemical hydride with the water.
Additional water is added to the vessel after all the chemical hydride is consumed in order to displace the hydrogen gas. The amount of water added is sufficient to fill at least 50% of the void volume of the vessel. The water reacts with any unreacted hydride present, displaces any flammable hydrogen gas remaining in the vessel, and contains hydrated and/or dissolved hydrolysis products.

### EXAMPLE 2

In this example, a treatment material consisting of water is introduced into a vessel containing reaction products from a hydrogen generation process after controllably reacting a chemical hydride with an aqueous solution to form the reaction products including a hydrogen product in the same manner as Example 1. The water reacts with the remaining unreacted chemical hydride and helps dissolve the hydrolysis products. Approximately 30 minutes after the water is added, heat is added to the vessel to vaporize the water. The water vapor displaces the hydrogen gas remaining in the vessel.

### EXAMPLE 3

In this example, CO₂ is introduced as a treatment material into a vessel containing reaction products from a hydrogen generation process after controllably reacting a chemical hydride with an aqueous solution to form the reaction products including a hydrogen product. The CO₂ is introduced by first mixing acetic acid with a bicarbonate salt. The CO₂ eliminates the remaining hydrogen gas in the vessel.

### EXAMPLE 4

Referring to the system of Figure 2, reaction vessel 104 has a volume of 200 cubic centimeters and contains 20 grams of calcium hydride. The head space of this vessel consists of hydrogen gas initially at atmospheric pressure. Vessel 152 has a volume of 100 cubic centimeters and contains 30 grams of water, with the head space consisting of hydrogen gas at an initial pressure of 15 psig. Initially, control device 108 is set so that reaction vessel 104 and vessel 152 are not in flow communication. When hydrogen is needed, control device 108 allows water to flow into the reaction vessel. Control device 108 controls the flow rate of water into the reaction vessel, which in turn controls the flow rate of hydrogen produced. To prevent the production of excess hydrogen, the water flow rate exiting the vessel 152 does not exceed 30 grams per hour. After 4 hours, nearly all of the water from vessel 152 has flowed into reaction vessel 104, and 1.7 grams of hydrogen have been produced through hydrogen outlet 110.

Vessel 154 has a volume of 100 cubic centimeters and initially contains 30 grams of an aqueous acetic acid solution that is 10 wt% acetic acid. Control device 113 is used to control the flow of the acetic acid solution into reaction vessel 104 as the treatment material. As the acetic acid solution is added to vessel 104, an agitator (not shown) is used to mix the contents of the vessel. After 1 hour, nearly all of the acetic acid has been added to the vessel, and the reaction products are less hazardous.

The hydrogen generation and treatment systems described above can be used to supply hydrogen at small to intermediate flow rates in the range of 1 standard cubic centimeter per minute to 1000 standard liters per minute, to various hydrogen-consuming devices. These hydrogen generation and treatment systems may be modular, integrated, single-use systems which are disconnected from the hydrogen consuming devices when each hydrogen generation process is complete. The spent hydrogen generators should be sufficiently non-hazardous so that they can be disposed of, temporarily stored, or transported to a central location for recharging and reuse. These systems may be used to supply hydrogen-consuming devices including, for example, power generation systems such as fuel cells and combustion systems such as cutting torches.

## Claims

1. A system for the generation of hydrogen comprising
(a) a reactor vessel containing a hydrogen precursor material;
(b) either
(1) an inlet line adapted to introduce a reactive material and a treatment material into the reactor vessel, or
(2) a first inlet line adapted to introduce a reactive material into the reactor vessel and a second inlet line adapted to introduce a treatment material into the reactor vessel; and
(c) an outlet adapted to withdraw hydrogen from the reactor vessel.

2. The system of Claim 1 having a first inlet line adapted to introduce a reactive material into the reactor vessel and a second inlet line adapted to introduce a treatment material into the reactor vessel.

3. The system of Claim 1 wherein the hydrogen precursor material is selected from the group consisting of LiH, LiAlH₄, LiBH₄, NaH, NaAlH₄, NaBH₄, MgH₂, Mg(BH₄)₂, KH, KBH₄, CaH₂, Ca(BH₄)₂, NH₃BH₃, aluminum, magnesium, magnesium-iron alloys, and combinations thereof.

4. The system of Claim 3 wherein the reactive material is selected from the group consisting of liquid water, water vapor, aqueous solutions, liquid ammonia, gaseous ammonia, liquid alcohols, gaseous alcohols, acidic solutions, basic solutions, and combinations thereof.

5. The system of Claim 4 wherein the treatment material is selected from the group consisting of liquid water, water vapor, aqueous solutions, liquid ammonia, gaseous ammonia, liquid alcohols, gaseous alcohols, acidic solutions, basic solutions, carbon dioxide, and combinations thereof.

6. The system of Claim 1 further comprising a heater adapted to heat the contents of the reactor vessel.

7. The system of Claim 1 further comprising a mixer adapted to mix the contents of the reactor vessel.

8. The system of Claim 2 wherein the first inlet line includes a flow control device to control the flow of the reactive material.

9. The system of Claim 2 wherein the second inlet line includes a flow control device to control the flow of the treatment material.

10. The system of Claim 1 further comprising a first storage vessel adapted to store the reactive material and having an outlet connected to the first inlet line.

11. The system of Claim 10 further comprising a second storage vessel adapted to store the treatment material and having an outlet connected to the second inlet line.

12. The system of Claim 11 wherein the first and second storage vessels are joined to the reactor vessel to form an integrated system.

13. The system of Claim 1 further comprising a storage vessel adapted to store the treatment material and having an outlet connected to the second inlet line.

14. A method for the generation of hydrogen comprising
(a) providing a reactor vessel having an inlet and an outlet;
(b) effecting a hydrogen generation step comprising
(b1) introducing a hydrogen precursor material into the reactor vessel;
(b2) introducing a reactive material into the reactor vessel and reacting at least a portion of the reactive material with at least a portion of the hydrogen precursor material to generate reaction products including any of hydrogen, byproduct material, unreacted reactive material, and unreacted hydrogen precursor material; and
(b3) withdrawing hydrogen from the outlet of the reactor vessel; and
(c) completing the hydrogen generation step and effecting a treatment step comprising introducing a treatment material into the reactor vessel and either or both of
(c1) reacting the treatment material with any of (i) the byproduct material, (ii) the unreacted reactive material, and (iii) the unreacted hydrogen precursor material; and
(c2) displacing from the reactor vessel any of (i) the byproduct material, (ii) the unreacted reactive material, (iii) the unreacted hydrogen precursor material, and (iv) hydrogen.

15. The method of Claim 14 wherein the hydrogen precursor material is selected from the group consisting of LiH, LiAlH₄, LiBH₄, NaH, NaAlH₄, NaBH₄, MgH₂, Mg(BH₄)₂, KH, KBH₄, CaH₂, Ca(BH₄)₂, NH₃BH₃, aluminum, magnesium, magnesium-iron alloys, and combinations thereof.

16. The method of Claim 15 wherein the reactive material is selected from the group consisting of liquid water, water vapor, aqueous solutions, liquid ammonia, gaseous ammonia, liquid alcohols, gaseous alcohols, acidic solutions, basic solutions, and combinations thereof.

17. The method of Claim 16 wherein the treatment material is selected from the group consisting of liquid water, water vapor, aqueous solutions, liquid ammonia, gaseous ammonia, liquid alcohols, gaseous alcohols, acidic solutions, basic solutions, carbon dioxide, and combinations thereof.

18. The method of Claim 14 further comprising heating the contents of the reactor vessel.

19. The method of Claim 14 further comprising mixing the contents of the reactor vessel.
